# EUROPEAN PATENT SPECIFICATION

(11) **EP 3 116 164 B1**
(45) Date of publication and mention of the grant of the patent: **13.12.2017**
(21) Application number: 14890118.4
(22) Date of filing: 22.04.2014
(51) Int. Cl.: H04L 12/24, H04L 5/14, H04L 5/00, H04L 12/28

(54) **SPECTRUM DIVISION METHOD AND DEVICE**
SPEKTRUMSTEILUNGSVERFAHREN UND -VORRICHTUNG
PROCÉDÉ ET DISPOSITIF DE DIVISION DU SPECTRE

(43) Date of publication of application: 11.01.2017
(73) Proprietor: Huawei Technologies Co., Ltd., Longgang District Shenzhen, Guangdong 518129 (CN)
(72) Inventor: TU, Jianping, Shenzhen Guangdong 518129 (CN); DONG, Huishen, Shenzhen Guangdong 518129 (CN); SHI, Cao, Shenzhen Guangdong 518129 (CN)
(74) Representative: Thun, Clemens
(86) International application number: PCT/CN2014/075930
(87) International publication number: WO 2015/161438

(56) References cited:
- EP-A1- 2 237 437
- WO-A1-2013/165429
- CN-A- 101 237 398
- CN-A- 101 562 487
- US-A1- 2011 150 057

## Description

### TECHNICAL FIELD

The present invention relates to the field of communications technologies, and in particular, to a spectrum division method and apparatus.

### BACKGROUND

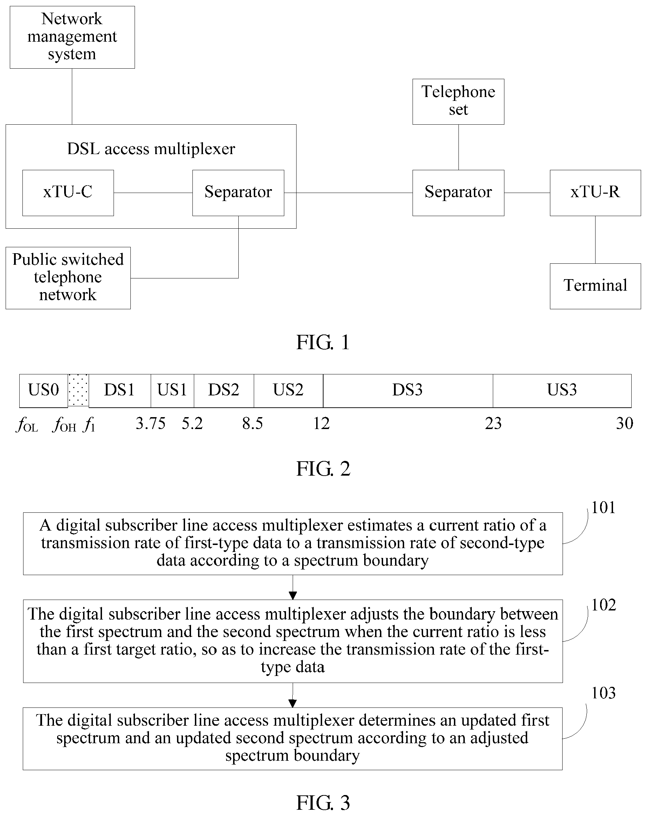

An x digital subscriber line (xDSL, a generic term for digital subscriber lines) technology is a technology for transmitting high-speed data over a telephone twisted pair, that is, an unshielded twisted pair, and the technology includes a DSL for baseband transmission, and further includes a DSL for passband transmission. In the DSL for passband transmission, a frequency division multiplexing technology is used to enable an xDSL and a plain old telephone service to coexist over a same twisted pair, where the xDSL occupies a high frequency band, the plain old telephone service occupies a baseband frequency band lower than 4 KHz, and a plain old telephone service signal is separated from an xDSL signal by a splitter. In an xDSL for baseband transmission, discrete multi-tone modulation is used, and a system that provides access for multiple xDSLs is referred to as a digital subscriber line access multiplexer (DSLAM), and a system reference model thereof is shown in FIG. 1, in which xTU-R is a remote device and xTU-C is a local device. Due to an electromagnetic induction principle, multiple signals accessing the DSLAM cause mutual interference, which is called crosstalk. The crosstalk includes near-end crosstalk and far-end crosstalk, and energy of both the near-end crosstalk and far-end crosstalk increases in a higher frequency band. In an existing xDSL technology, frequency division multiplexing (FDD) is used for uplink and downlink channels, and impact of near-end crosstalk on system performance can be ignored. The International Telecommunication Union-Telecommunication Standardization Sector (ITU-T) has formulated the G.993.5 standard, in which joint transmitting and receiving is performed at a central office (CO) by using a vectoring technology to cancel the far-end crosstalk. In an ideal situation, after the far-end crosstalk is eliminated by using the Vectoring technology, a rate of each line may reach a crosstalk-free rate of the line. Then, for a FDD system, a spectrum bandwidth is fixed, a sum of uplink and downlink rates is also fixed, and planning of uplink and downlink frequency bands determines allocation of uplink and downlink rates. FIG. 2 shows frequency band division for VDSL2 of 0 to 30 MHz (Far End Crosstalk Cancellation) in North America. A DSLAM divides, according to a division manner provided by an operator, a frequency band occupied by an xDSL into an uplink part and a downlink part, and uplink data transmission and downlink data transmission are performed between a terminal and a network by using uplink and downlink frequency spectrums that are obtained after division.

For example, CN 101 237 398A refers to a method and system for improving VDSL stability. Further, EP 2 237 437 A1 refers to a method, equipment and digital subscriber line system for spectrum optimization. Further, US 2011/150057A1 refers to monitoring Non-Managed Wire Pairs to Improve Dynamic Spectrum Management Performance. Further, WO 2013/165429A1 refers to an apparatus, system and method for DSM energy management.

The prior art has at least the following problem: existing fixed frequency band division cannot ensure that all users achieve an expected uplink-downlink rate ratio. With development of video services such as internet protocol television (IPTV) and three dimensions (3D) high definition, users have a drastically increasing requirement on a downlink rate, and a requirement on an uplink rate is much lower than the requirement on the downlink rate. A current uplink-downlink rate ratio provided by an operator is usually above 1:4, and sometimes even reaches 1:9, that is, even if a downlink service having a rate of 100 M is provided, a maximum uplink rate needed is 25 M, and it is a waste to allocate redundant frequency spectrum resources to the uplink; in this case, the division of uplink and downlink spectrums performed by the operator is improper, and a system cannot fully utilize spectrum resources, limiting a downlink data transmission rate and system performance.

### SUMMARY

Embodiments of the present invention provide a spectrum division method and apparatus, which can resolve a problem that a downlink data transmission rate and system performance are limited because an existing uplink-downlink spectrum division manner causes a system to fail to fully utilize spectrum resources.

To achieve the foregoing objective, the following technical solutions are used in the embodiments of the present invention:

According to a first aspect, an embodiment of the present invention provides a spectrum division method, including:
estimating a current ratio of a transmission rate of first-type data to a transmission rate of second-type data according to a spectrum boundary, where the spectrum boundary is a boundary that is in a spectrum and that is between a first spectrum and a second spectrum, the first spectrum is used to transmit the first-type data, and the second spectrum is used to transmit the second-type data;
adjusting the boundary between the first spectrum and the second spectrum when the current ratio is less than a first target ratio, so as to increase the transmission rate of the first-type data, where the first target ratio is predetermined; and
determining an updated first spectrum and an updated second spectrum according to an adjusted spectrum boundary.

With reference to the first aspect, in a first possible implementation manner of the first aspect, before the adjusting the boundary between the first spectrum and the second spectrum when the current ratio is less than a first target ratio, the method further includes:
obtaining a second target ratio, of a target transmission rate of the first-type data to a target transmission rate of the second-type data, of each service; and
determining a maximum value among the second target ratios of the services as the first target ratio.

With reference to the first aspect, in a second possible implementation manner of the first aspect, before the estimating a current ratio of a transmission rate of first-type data to a transmission rate of second-type data according to a spectrum boundary, the method further includes:
obtaining line parameter information; and
setting default values of the first spectrum and the second spectrum, where the line parameter information and the default values are used to estimate the current ratio.

With reference to the first aspect, in a third possible implementation manner of the first aspect, while the adjusting the boundary between the first spectrum and the second spectrum, so as to increase the transmission rate of the first-type data is performed, the transmission rate of the second-type data is decreased; and
after the adjusting the boundary between the first spectrum and the second spectrum when the current ratio is less than a first target ratio, the method further includes:
re-estimating a ratio of an adjusted transmission rate of the first-type data to an adjusted transmission rate of the second-type data according to the adjusted spectrum boundary and using the ratio as an updated current ratio.

With reference to the first aspect, in a fourth possible implementation manner of the first aspect, the method further includes:
maintaining the spectrum boundary when the current ratio is not less than the first target ratio.

With reference to the first aspect, in a fifth possible implementation manner of the first aspect, after the determining an updated first spectrum and an updated second spectrum according to an adjusted spectrum boundary, the method further includes:
determining a spectrum area, by which the spectrum boundary passes while moving from an initial spectrum boundary to a target spectrum boundary, as an overlapping spectrum interval; and
reallocating bits of all users within the overlapping spectrum interval by using an on line reconfiguration OLR technology.

According to a second aspect, an embodiment of the present invention provides a spectrum division apparatus, including:
an estimation unit, configured to estimate a current ratio of a transmission rate of first-type data to a transmission rate of second-type data according to a spectrum boundary, where the spectrum boundary is a boundary that is in a spectrum and that is between a first spectrum and a second spectrum, the first spectrum is used to transmit the first-type data, and the second spectrum is used to transmit the second-type data;
a regulation unit, configured to adjust the boundary between the first spectrum and the second spectrum when the current ratio is less than a first target ratio, so as to increase the transmission rate of the first-type data, where the first target ratio is predetermined; and
a determining unit, configured to determine an updated first spectrum and an updated second spectrum according to an adjusted spectrum boundary.

With reference to the second aspect, in a first possible implementation manner of the second aspect, the apparatus further includes:
an obtaining unit, configured to obtain a second target ratio, of a target transmission rate of the first-type data to a target transmission rate of the second-type data, of each service; and
the determining unit is further configured to determine a maximum value among the second target ratios of the services as the first target ratio.

With reference to the first possible implementation manner of the second aspect, in a second possible implementation manner of the second aspect, the obtaining unit is further configured to obtain line parameter information; and the apparatus further includes:
a setting unit, configured to set default values of the first spectrum and the second spectrum, where the line parameter information and the default values are used to estimate the current ratio.

With reference to the second aspect, in a third possible implementation manner of the second aspect, while the boundary between the first spectrum and the second spectrum is adjusted, so as to increase the transmission rate of the first-type data, the transmission rate of the second-type data is decreased; and
the estimation unit is further configured to re-estimate a ratio of an adjusted transmission rate of the first-type data to an adjusted transmission rate of the second-type data according to the adjusted spectrum boundary and use the ratio as an updated current ratio.

With reference to the second aspect, in a fourth possible implementation manner of the second aspect, the apparatus further includes:
a maintaining unit, configured to maintain the spectrum boundary when the current ratio is not less than the first target ratio.

With reference to the second aspect, in a fifth possible implementation manner of the second aspect, the determining unit is further configured to determine a spectrum area, by which the spectrum boundary passes while moving from an initial spectrum boundary to a target spectrum boundary, as an overlapping spectrum interval; and the apparatus further includes:
an allocation unit, configured to reallocate bits of all users within the overlapping spectrum interval by using an on line reconfiguration OLR technology.

In the spectrum division method and the spectrum division apparatus that are provided by the embodiments of the present invention, a digital subscriber line access multiplexer in the present invention estimates a current ratio of a transmission rate of first-type data to a transmission rate of second-type data according to a spectrum boundary, adjusts the boundary between the first spectrum and the second spectrum when the current ratio is less than a first target ratio, so as to increase the transmission rate of the first-type data, and determines an updated first spectrum and an updated second spectrum according to an adjusted spectrum boundary. In this way, the spectrum boundary is adjusted according to the first target ratio of the transmission rate of the first-type data to the transmission rate of the second-type data in a system, to improve a downlink data transmission rate, so as to fully utilize spectrum resources and improve system performance.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a system model according to the prior art;
FIG. 2 is a schematic diagram of frequency band division in North America according to the prior art;
FIG. 3 is a flowchart of a method according to an embodiment of the present invention;
FIG. 4 is a flowchart of a method according to another embodiment of the present invention;
FIG. 5 is a schematic diagram of movement of a cut-off frequency according to another embodiment of the present invention;
FIG. 6 is a flowchart of a method according to another embodiment of the present invention;
FIG. 7 and FIG. 8 are schematic structural diagrams of an apparatus according to another embodiment of the present invention; and
FIG. 9 is a schematic structural diagram of an apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An embodiment of the present invention provides a spectrum division method, used in a digital subscriber line access multiplexer. As shown in FIG. 3, the method includes:
101: A digital subscriber line access multiplexer estimates a current ratio of a transmission rate of first-type data to a transmission rate of second-type data according to a spectrum boundary.

The spectrum boundary is a boundary that is in a spectrum and that is between a first spectrum and a second spectrum, the first spectrum is used to transmit the first-type data, and the second spectrum is used to transmit the second-type data.

Optionally, before estimating the current ratio, the digital subscriber line access multiplexer further obtains line parameter information, which is used by the digital subscriber line access multiplexer to estimate current ratios of lines to line lengths.

Further, the digital subscriber line access multiplexer sets default values of a first spectrum and a second spectrum, to estimate the current ratio.

102: The digital subscriber line access multiplexer adjusts the boundary between the first spectrum and the second spectrum when the current ratio is less than a first target ratio, so as to increase the transmission rate of the first-type data.

The first target ratio is predetermined.

Optionally, the digital subscriber line access multiplexer may obtain a second target ratio, of a target transmission rate of the first-type data to a target transmission rate of the second-type data, of each service, and then determines a maximum value among the second target ratios of the services as the first target ratio.

Optionally, while adjusting the boundary between the first spectrum and the second spectrum, so as to increase the transmission rate of the first-type data, the digital subscriber line access multiplexer decreases the transmission rate of the second-type data; in this case, when the current ratio is less than the first target ratio, after adjusting the boundary between the first spectrum and the second spectrum, the digital subscriber line access multiplexer may further re-estimate a ratio an adjusted transmission rate of the first-type data to an adjusted transmission rate of the second-type data according to the adjusted spectrum boundary and use the ratio as an updated current ratio.

Optionally, the spectrum boundary is maintained when the current ratio is not less than the first target ratio.

103: The digital subscriber line access multiplexer determines an updated first spectrum and an updated second spectrum according to an adjusted spectrum boundary.

Further, after dividing the spectrum according to a target spectrum boundary, the digital subscriber line access multiplexer determines a spectrum area, by which the spectrum boundary passes while moving from an initial spectrum boundary to a target spectrum boundary, as an overlapping spectrum interval, and reallocates bits of all users within the overlapping spectrum interval by using an On Line Reconfiguration (OLR) technology.

It should be noted that in this embodiment of the present invention, the digital subscriber line access multiplexer divides the first spectrum and the second spectrum according to the first target ratio, but a method for dividing the first spectrum and the second spectrum by the digital subscriber line access multiplexer is not limited thereto; the first spectrum and the second spectrum may also be divided according to other conditions derived from the ratio of the transmission rate of the first-type data to the transmission rate of the second-type data. For example, coverage areas of the transmission rate of the first-type data and the transmission rate of the second-type data (that is, reachable maximum transmission distances), a power consumption of the digital subscriber line access multiplexer, stability of services, and allowances for signal-to-noise ratios of the first spectrum and the second spectrum, and a data processing process thereof is the same as that in this embodiment of the present invention. Specifically, the ratio of the transmission rate of the first-type data to the transmission rate of the second-type data in this embodiment is replaced with a ratio between coverage areas, a ratio between power consumptions, or a ratio between allowances for signal-to-noise ratios, and a target ratio is correspondingly replaced; after an actual ratio is compared with the target ratio, the spectrum boundary is adjusted according to a result of the comparison so as to perform division to obtain a first spectrum value and a second spectrum value that meet the target.

In the prior art, existing fixed frequency band division cannot ensure that all users achieve an expected uplink-downlink rate ratio; sometimes, division of uplink and downlink spectrums is improper, and a system cannot fully utilize spectrum resources, limiting a downlink data transmission rate and system performance. In this embodiment of the present invention, the digital subscriber line access multiplexer estimates a current ratio of a transmission rate of first-type data to a transmission rate of second-type data according to a spectrum boundary, adjusts the boundary between the first spectrum and the second spectrum when the current ratio is less than a first target ratio, so as to increase the transmission rate of the first-type data, and determines an updated first spectrum and an updated second spectrum according to an adjusted spectrum boundary. In this way, the spectrum boundary is adjusted according to the first target ratio of the transmission rate of the first-type data to the transmission rate of the second-type data in a system, to improve a downlink data transmission rate, so as to fully utilize spectrum resources and improve system performance.

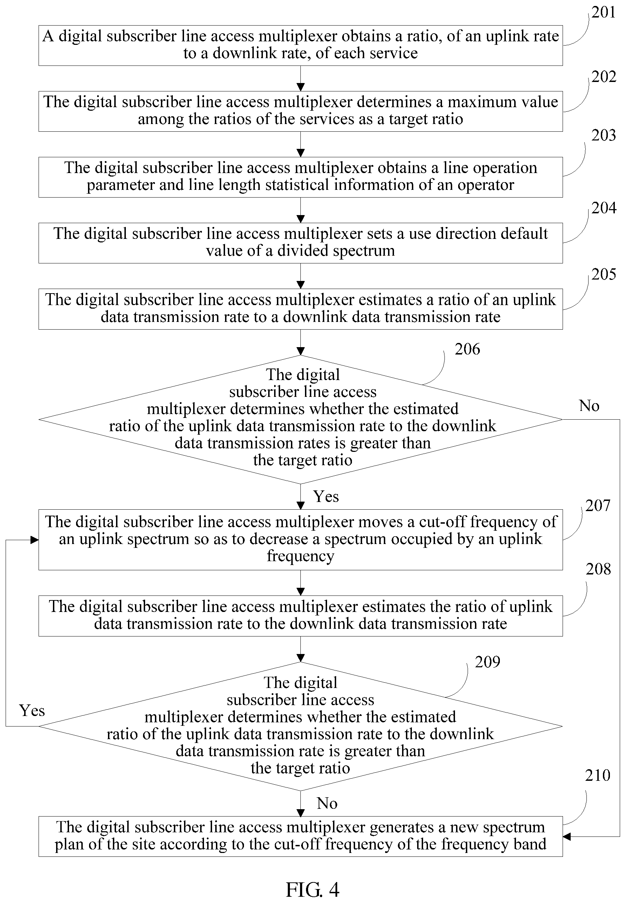

Another embodiment of the present invention provides a spectrum division method, used in a digital subscriber line access multiplexer. As shown in FIG. 4, the method includes:
201: A digital subscriber line access multiplexer obtains a ratio, of an uplink rate to a downlink rate, of each service.

The digital subscriber line access multiplexer obtains the ratio, of the uplink rate to the downlink rate, of each service from an operation support system (OSS) service provisioning system. The uplink rate is a transmission rate of uplink data, and the downlink rate is a transmission rate of downlink data.

It should be noted that the digital subscriber line access multiplexer may directly obtain the ratio from the OSS or deduce the ratio by using other information. For example, because an uplink spectrum needs to transmit instruction information for a user, the uplink spectrum may be allocated according to the instruction information, so as to obtain the ratio of the uplink rate to the downlink rate.

202: The digital subscriber line access multiplexer determines a maximum value among the ratios of the services as a target ratio.

The digital subscriber line access multiplexer selects the maximum value, among the obtained ratios of the uplink rates to the downlink rates of the services, as the target ratio; the target ratio obtained in this way can satisfy needs of all services.

203: The digital subscriber line access multiplexer obtains a line operation parameter and line length statistical information of an operator.

The digital subscriber line access multiplexer obtains the line operation parameter and the line length statistical information of the operator from the OSS.

204: The digital subscriber line access multiplexer sets a use direction default value of a divided spectrum.

As regards a spectrum in a site, the spectrum has been divided by using a fixed division method, and the digital subscriber line access multiplexer sets the default value according to the use direction of the divided spectrum, so as to simulate a data transmission situation of the current divided spectrum. For example, a default value of a downlink spectrum is set to 0, and a default value in an uplink direction is set 1.

205: The digital subscriber line access multiplexer estimates a ratio of an uplink data transmission rate to a downlink data transmission rate.

The digital subscriber line access multiplexer estimates ratios of the uplink transmission rate to the downlink data transmission rate in cases of different line lengths according to the obtained line information and a result of the data transmission simulation of the current divided spectrum.

206: The digital subscriber line access multiplexer determines whether the estimated ratio of the uplink data transmission rate to the downlink data transmission rate is greater than the target ratio; if the estimated ratio of the uplink data transmission rate to the downlink data transmission rate is greater than the target ratio, perform step 207; or if the estimated ratio of the uplink data transmission rate to the downlink data transmission rate is not greater than the target ratio, perform step 210.

After estimating the ratio of the uplink data transmission rate to the downlink data transmission rate in step 205, the digital subscriber line access multiplexer compares the ratio with the target ratio and determines whether the estimated ratio of the uplink data transmission rate to the downlink data transmission rate is greater than the target ratio. If the estimated ratio of the uplink data transmission rate to the downlink data transmission rate is greater than the target ratio, it indicates that there is a surplus of the uplink rate, and therefore step 207 is performed; if the estimated ratio of the uplink data transmission rate to the downlink data transmission rate is not greater than the target ratio, the frequency band division does not need to be adjusted, and therefore step 210 is performed.

207: The digital subscriber line access multiplexer moves a cut-off frequency of an uplink spectrum so as to decrease a spectrum occupied by an uplink frequency.

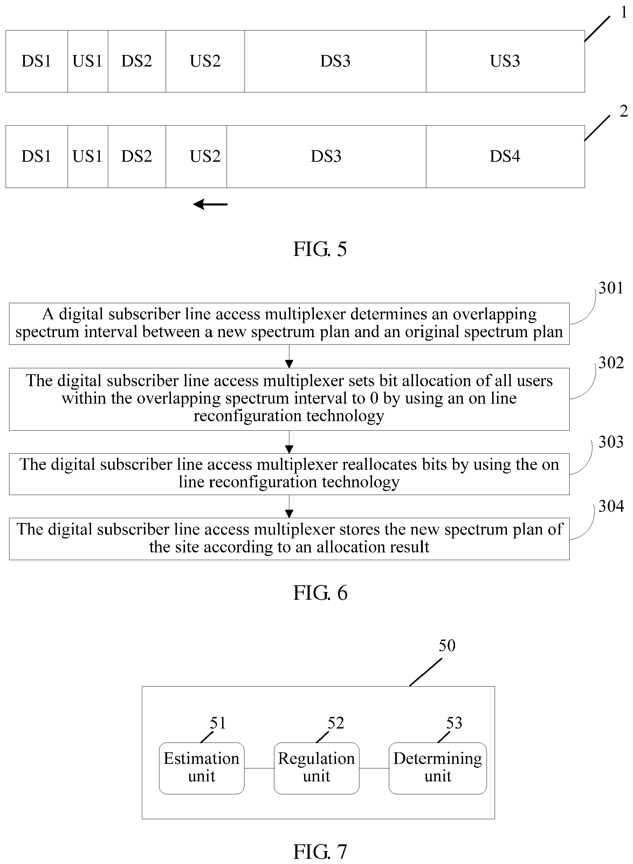

The digital subscriber line access multiplexer moves the cut-off frequency of the uplink spectrum so as to decrease the spectrum occupied by the uplink frequency. As shown in FIG. 5, 2 is an effect after movement is performed based on 1, where US refers to an uplink spectrum, and DS refers to a downlink spectrum.

It should be noted that a manner for adjusting, by the digital subscriber line access multiplexer, uplink and downlink occupied spectrums in the spectrum may also be a manner such as moving an initial frequency of the uplink spectrum, which is not limited herein.

208: The digital subscriber line access multiplexer estimates the ratio of uplink data transmission rate to the downlink data transmission rate.

209: The digital subscriber line access multiplexer determines whether the estimated ratio of the uplink data transmission rate to the downlink data transmission rate is greater than the target ratio; if the estimated ratio of the uplink data transmission rate to the downlink data transmission rate is greater than the target ratio, perform step 207; or if the estimated ratio of the uplink data transmission rate to the downlink data transmission rate is not greater than the target ratio, perform step 210.

210: The digital subscriber line access multiplexer generates a new spectrum plan of the site according to the cut-off frequency of the frequency band.

It should be noted that in this embodiment of the present invention, the digital subscriber line access multiplexer divides the uplink spectrum and the downlink spectrum according to the ratio of the uplink data transmission rate to the downlink data transmission rate, but a method for dividing the uplink spectrum and the downlink spectrum by the digital subscriber line access multiplexer is not limited thereto; the uplink spectrum and the downlink spectrum may also be divided according to other conditions derived from the ratio of the uplink data transmission rate to the downlink data transmission rate. For example, coverage areas of the uplink data transmission rate and the downlink data transmission rate (that is, reachable maximum transmission distances), a power consumption of the digital subscriber line access multiplexer, stability of services, and allowances for signal-to-noise ratios of the uplink spectrum and the downlink spectrum, and a data processing process thereof is the same as that in this embodiment of the present invention. Specifically, the ratio of the uplink data transmission rate to the downlink data transmission rate in this embodiment is replaced with a ratio between coverage areas, a ratio between power consumptions, or a ratio between allowances for signal-to-noise ratios, and a target ratio is correspondingly replaced; after an actual ratio is compared with the target ratio, the spectrum boundary is adjusted according to a result of the comparison so as to perform division to obtain a first spectrum value and a second spectrum value that meet the target.

In the prior art, existing fixed frequency band division cannot ensure that all users achieve an expected uplink-downlink rate ratio; sometimes, division of uplink and downlink spectrums is improper, and a system cannot fully utilize spectrum resources, limiting a downlink data transmission rate and system performance. In this embodiment of the present invention, the digital subscriber line access multiplexer determines a target ratio of an uplink rate to a downlink rate and estimates a ratio of the uplink rate to the downlink rate according to an initial spectrum boundary, adjusts a boundary between an uplink spectrum and a downlink spectrum when the ratio of the uplink rate to the downlink rate is less than the target ratio until the ratio of the uplink rate to the downlink rate is not less than the target ratio, and divides the uplink and downlink spectrums according to the adjusted spectrum boundary. In this way, the spectrum boundary is adjusted according to the target ratio of the uplink downlink data transmission rate to the downlink data transmission rate in a system, to improve the downlink data transmission rate, so as to fully utilize spectrum resources and improve system performance.

Because a service rate requirement of a user rises continuously, and sometimes, an initially configured spectrum plan cannot meet the requirement of the user. Because the user has activated services, if switching to a new spectrum plan is performed, all services need to be interrupted because an overlapping part may occur between a new spectrum plan and the original spectrum plan, and this part of spectrum band may produce severe near-end crosstalk, causing the user to go offline, affecting the user in using the services, and causing more complaints. Another embodiment of the present invention provides a spectrum division method, used in a digital subscriber line access multiplexer. After the uplink and downlink spectrums divided according to the method shown in FIG. 4 are actually applied, as shown in FIG. 6, the method includes:
301: A digital subscriber line access multiplexer determines an overlapping spectrum interval between a new spectrum plan and an original spectrum plan.

In step 207, the digital subscriber line access multiplexer adjusts the spectrum division; the new spectrum plan is a spectrum plan in step 210, and the original spectrum plan is a spectrum plan without the regulation in step 207. The digital subscriber line access multiplexer determines the overlapping spectrum interval between the new spectrum plan and the original spectrum plan.

302: The digital subscriber line access multiplexer sets bit allocation of all users within the overlapping spectrum interval to 0 by using an on line reconfiguration technology.

The digital subscriber line access multiplexer sets bits allocated to all users within the overlapping spectrum interval to 0, which indicates that no information is transferred within the overlapping spectrum interval temporally.

303: The digital subscriber line access multiplexer reallocates bits by using the on line reconfiguration technology.

Bits are reallocated by using the on line reconfiguration OLR technology, and the allocation is stopped until an uplink and a downlink both reach a target service rate or allocation of sub-carriers in the overlapping spectrum interval is completed.

It should be noted that if the uplink and the downlink reach the target service rate, and there is still an unallocated spectrum interval, re-allocation is performed in next service upgrade.

304: The digital subscriber line access multiplexer stores the new spectrum plan of the site according to a result of the allocation.

It should be noted that step 304 is an optional step; the digital subscriber line access multiplexer stores the new spectrum plan of the site to facilitate subsequent spectrum division.

Based on the method shown in FIG. 4, in this embodiment of the present invention, after the spectrums divided according to the method shown in FIG. 4 are actually applied, the digital subscriber line access multiplexer adjusts a boundary between the uplink spectrum and the downlink spectrum in real time according to real-time uplink and downlink transmission rates. In this way, the uplink and downlink spectrums are properly divided according to specific transmission situations of uplink and downlink data in a system, which not only fully utilizes spectrum resources but also improves system performance; moreover, during spectrum division, services do not need to be interrupted, avoiding affecting the user in using the services.

Another embodiment of the present invention provides a spectrum division apparatus 50. As shown in FIG. 7, the apparatus 50 includes:
an estimation unit 51, configured to estimate a current ratio of a transmission rate of first-type data to a transmission rate of second-type data according to a spectrum boundary, where the spectrum boundary is a boundary that is in a spectrum and that is between a first spectrum and a second spectrum, the first spectrum is used to transmit the first-type data, and the second spectrum is used to transmit the second-type data;
a regulation unit 52, configured to adjust the boundary between the first spectrum and the second spectrum when the current ratio is less than a first target ratio, so as to increase the transmission rate of the first-type data, where the first target ratio is predetermined; and
a determining unit 53, configured to determine an updated first spectrum and an updated second spectrum according to an adjusted spectrum boundary.

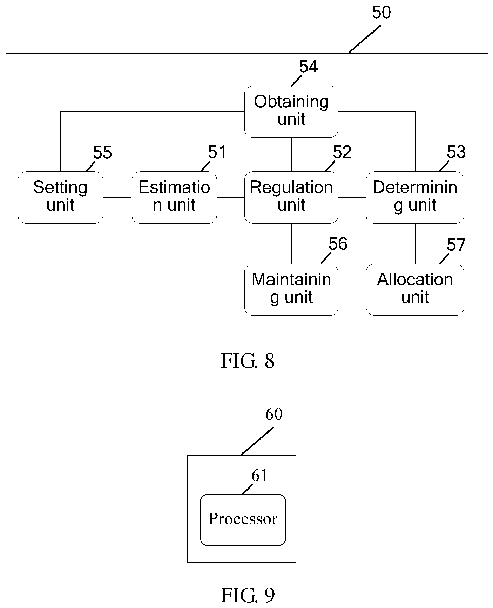

Further, as shown in FIG. 8, the apparatus 50 may further include:
an obtaining unit 54, configured to obtain a second target ratio, of a target transmission rate of the first-type data to a target transmission rate of the second-type data, of each service.

Further, the determining unit 53 is further configured to determine a maximum value among the second target ratios of the services as the first target ratio.

Further, the obtaining unit 54 is further configured to obtain line parameter information.

Further, as shown in FIG. 8, the apparatus 50 may further include:
a setting unit 55, configured to set default values of the first spectrum and the second spectrum, where the line parameter information and the default values are used to estimate the current ratio.

Further, the estimation unit 51 is further configured to re-estimate a ratio of an adjusted transmission rate of the first-type data to an adjusted transmission rate of the second-type data according to the adjusted spectrum boundary and use the ratio as an updated current ratio.

Further, as shown in FIG. 8, the apparatus 50 may further include:
a maintaining unit 56, configured to maintain the spectrum boundary when the current ratio is not less than the first target ratio.

Further, the determining unit 53 is further configured to determine, a spectrum area by which the spectrum boundary passes while moving from an initial spectrum boundary to a target spectrum boundary, as an overlapping spectrum interval.

Further, as shown in FIG. 8, the apparatus 50 may further include:
an allocation unit 57, configured to reallocate bits of all users within the overlapping spectrum interval by using an on line reconfiguration OLR technology.

In the prior art, existing fixed frequency band division cannot ensure that all users achieve an expected uplink-downlink rate ratio; sometimes, division of uplink and downlink spectrums is improper, and a system cannot fully utilize spectrum resources, lowering a downlink data transmission rate and system performance. In this embodiment of the present invention, the apparatus 50 estimates a current ratio of a transmission rate of first-type data to a transmission rate of second-type data according to a spectrum boundary, adjusts the boundary between the first spectrum and the second spectrum when the current ratio is less than a first target ratio, so as to increase the transmission rate of the first-type data, and determines an updated first spectrum and an updated second spectrum according to an adjusted spectrum boundary. In this way, the spectrum boundary is adjusted according to the first target ratio of the transmission rate of the first-type data to the transmission rate of the second-type data in a system, to improve a downlink data transmission rate, so as to fully utilize spectrum resources and improve system performance.

Another embodiment of the present invention provides a spectrum division apparatus 60. As shown in FIG. 9, the apparatus 60 includes:
a processor 61, configured to: estimate a current ratio of a transmission rate of first-type data to a transmission rate of second-type data according to a spectrum boundary, where the spectrum boundary is a boundary that is in a spectrum and that is between a first spectrum and a second spectrum, the first spectrum is used to transmit the first-type data, and the second spectrum is used to transmit the second-type data; adjust the boundary between the first spectrum and the second spectrum when the current ratio is less than a first target ratio, so as to increase the transmission rate of the first-type data, where the first target ratio is predetermined; and determine an updated first spectrum and an updated second spectrum according to an adjusted spectrum boundary.

Further, the processor 61 is configured to obtain a second target ratio, of a target transmission rate of the first-type data to a target transmission rate of the second-type data, of each service, and determine a maximum value among the second target ratios of the services as the first target ratio.

Further, the processor 61 is configured to obtain line parameter information and set default values of the first spectrum and the second spectrum, where the line parameter information and the default values are used to estimate the current ratio.

Further, the processor 61 is further configured to re-estimate a ratio of an adjusted transmission rate of the first-type data to an adjusted transmission rate of the second-type data according to the adjusted spectrum boundary and use the ratio as an updated current ratio.

Further, the processor 61 is further configured to maintain the spectrum boundary when the current ratio is not less than the first target ratio.

Further, the processor 61 is further configured to determine a spectrum area, by which the spectrum boundary passes while moving from an initial spectrum boundary to a target spectrum boundary, as an overlapping spectrum interval, and reallocate bits of all users within the overlapping spectrum interval by using an on line reconfiguration OLR technology.

In the prior art, existing fixed frequency band division cannot ensure that all users achieve an expected uplink-downlink rate ratio; sometimes, division of uplink and downlink spectrums is improper, and a system cannot fully utilize spectrum resources, lowering a downlink data transmission rate and system performance. In this embodiment of the present invention, the apparatus 60 estimates a current ratio of a transmission rate of first-type data to a transmission rate of second-type data according to a spectrum boundary, adjusts a boundary between a first spectrum and a second spectrum when the current ratio is less than a first target ratio, so as to increase the transmission rate of the first-type data, and determines an updated first spectrum and an updated second spectrum according to an adjusted spectrum boundary. In this way, the spectrum boundary is adjusted according to the first target ratio of the transmission rate of the first-type data to the transmission rate of the second-type data in a system, to improve a downlink data transmission rate, so as to fully utilize spectrum resources and improve system performance.

The spectrum division apparatus provided in this embodiment of the present invention can implement the method embodiment provided above. Refer to the description in the method embodiment for implementation of specific functions, and details are not described herein again. The spectrum division method and apparatus provided in the embodiments of the present invention are applicable to a digital subscriber line access multiplexer, but is not limited thereto.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (ROM), a random access memory (RAM), or the like.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A spectrum division method, **characterized by** comprising:
estimating a current ratio of a transmission rate of first-type data to a transmission rate of second-type data according to a spectrum boundary, wherein the spectrum boundary is a boundary that is in a spectrum and that is between a first spectrum and a second spectrum, the first spectrum is used to transmit the first-type data, and the second spectrum is used to transmit the second-type data (step 101);
adjusting the boundary between the first spectrum and the second spectrum when the current ratio is less than a first target ratio, so as to increase the transmission rate of the first-type data, wherein the first target ratio is predetermined (step 102); and
determining an updated first spectrum and an updated second spectrum according to an adjusted spectrum boundary (step 103).

2. The method according to claim 1, wherein before the adjusting the boundary between the first spectrum and the second spectrum when the current ratio is less than a first target ratio, the method further comprises:
obtaining a second target ratio, of a target transmission rate of the first-type data to a target transmission rate of the second-type data, of each service; and
determining a maximum value among the second target ratios of the services as the first target ratio.

3. The method according to claim 1, wherein before the estimating a current ratio of a transmission rate of first-type data to a transmission rate of second-type data according to a spectrum boundary, the method further comprises:
obtaining line parameter information; and
setting default values of the first spectrum and the second spectrum, wherein the line parameter information and the default values are used to estimate the current ratio.

4. The method according to claim 1, wherein while the adjusting the boundary between the first spectrum and the second spectrum, so as to increase the transmission rate of the first-type data is performed, the transmission rate of the second-type data is decreased; and
after the adjusting the boundary between the first spectrum and the second spectrum when the current ratio is less than a first target ratio, the method further comprises:
re-estimating a ratio of an adjusted transmission rate of the first-type data to an adjusted transmission rate of the second-type data according to the adjusted spectrum boundary and using the ratio as an updated current ratio.

5. The method according to claim 1, further comprising:
maintaining the spectrum boundary when the current ratio is not less than the first target ratio.

6. The method according to claim 1, wherein after the determining an updated first spectrum and an updated second spectrum according to an adjusted spectrum boundary, the method further comprises:
determining a spectrum area, by which the spectrum boundary passes while moving from an initial spectrum boundary to a target spectrum boundary, as an overlapping spectrum interval; and
reallocating bits of all users within the overlapping spectrum interval by using an on line reconfiguration, OLR, technology.

7. A spectrum division apparatus, **characterized by** comprising:
an estimation unit (51), configured to estimate a current ratio of a transmission rate of first-type data to a transmission rate of second-type data according to a spectrum boundary, wherein the spectrum boundary is a boundary that is in a spectrum and that is between a first spectrum and a second spectrum, the first spectrum is used to transmit the first-type data, and the second spectrum is used to transmit the second-type data;
a regulation unit (52), configured to adjust the boundary between the first spectrum and the second spectrum when the current ratio is less than a first target ratio, so as to increase the transmission rate of the first-type data, wherein the first target ratio is predetermined; and
a determining unit (53), configured to determine an updated first spectrum and an updated second spectrum according to an adjusted spectrum boundary.

8. The apparatus according to claim 7, wherein the apparatus further comprises:
an obtaining unit, configured to obtain a second target ratio, of a target transmission rate of the first-type data to a target transmission rate of the second-type data, of each service; and
the determining unit is further configured to determine a maximum value among the second target ratios of the services as the first target ratio.

9. The apparatus according to claim 8, wherein the obtaining unit is further configured to obtain line parameter information; and the apparatus further comprises:
a setting unit, configured to set default values of the first spectrum and the second spectrum, wherein the line parameter information and the default values are used to estimate the current ratio.

10. The apparatus according to claim 7, wherein while the boundary between the first spectrum and the second spectrum is adjusted, so as to increase the transmission rate of the first-type data, the transmission rate of the second-type data is decreased; and
the estimation unit is further configured to re-estimate a ratio of an adjusted transmission rate of the first-type data to an adjusted transmission rate of the second-type data according to the adjusted spectrum boundary and use the ratio as an updated current ratio.

11. The apparatus according to claim 7, wherein the apparatus further comprises:
a maintaining unit, configured to maintain the spectrum boundary when the current ratio is not less than the first target ratio.

12. The apparatus according to claim 7, wherein the determining unit is further configured to determine a spectrum area, by which the spectrum boundary passes while moving from an initial spectrum boundary to a target spectrum boundary, as an overlapping spectrum interval; and the apparatus further comprises:
an allocation unit, configured to reallocate bits of all users within the overlapping spectrum interval by using an on line reconfiguration, OLR, technology.

## Patentansprüche

1. Spektrumaufteilungsverfahren, **dadurch gekennzeichnet, dass** es Folgendes umfasst:
Schätzen eines momentanen Verhältnisses einer Übertragungsrate von Daten eines ersten Typs zu einer Übertragungsrate von Daten eines zweiten Typs gemäß einer Spektrumsgrenze, wobei die Spektrumsgrenze eine Grenze ist, die in einem Spektrum liegt und die zwischen einem ersten Spektrum und einem zweiten Spektrum liegt, wobei das erste Spektrum verwendet wird, um die Daten des ersten Typs zu übertragen und wobei das zweite Spektrum verwendet wird, um die Daten des zweiten Typs zu übertragen (Schritt 101);
Anpassen der Grenze zwischen dem ersten Spektrum und dem zweiten Spektrum, wenn das momentane Verhältnis niedriger als ein erstes Zielverhältnis ist, so dass die Übertragungsrate von den Daten des ersten Typs erhöht wird, wobei das erste Zielverhältnis vorbestimmt ist (Schritt 102); und
Bestimmen eines aktualisierten ersten Spektrums und eines aktualisierten zweiten Spektrums gemäß einer angepassten Spektrumsgrenze (Schritt 103).

2. Verfahren nach Anspruch 1, wobei das Verfahren vor dem Anpassen der Grenze zwischen dem ersten Spektrum und dem zweiten Spektrum, wenn das momentane Verhältnis niedriger als ein erstes Zielverhältnis ist, ferner Folgendes umfasst:
Erhalten eines zweiten Zielverhältnisses, einer Zielübertragungsrate von den Daten des ersten Typs zu einer Zielübertragungsrate von den Daten des zweiten Typs, von jedem Dienst; und
Bestimmen eines Maximalwertes unter den zweiten Zielverhältnissen der Dienste als das erste Zielverhältnis.

3. Verfahren nach Anspruch 1, wobei das Verfahren vor dem Schätzen eines momentanen Verhältnisses einer Übertragungsrate von Daten eines ersten Typs zu einer Übertragungsrate von Daten eines zweiten Typs gemäß einer Spektrumsgrenze ferner Folgendes umfasst:
Erhalten von Leitungsparameterinformationen; und
Festlegen von Standardwerten des ersten Spektrums und des zweiten Spektrums, wobei die Leitungsparameterinformationen und die Standardwerte verwendet werden, um das momentane Verhältnis zu schätzen.

4. Verfahren nach Anspruch 1, wobei die Übertragungsrate von den Daten des zweiten Typs verringert wird, während das Anpassen der Grenze zwischen dem ersten Spektrum und dem zweiten Spektrum, so dass die Übertragungsrate von den Daten des ersten Typs erhöht wird, durchgeführt wird; und
wobei das Verfahren nach dem Anpassen der Grenze zwischen dem ersten Spektrum und dem zweiten Spektrum, wenn das momentane Verhältnis niedriger als ein erstes Zielverhältnis ist, ferner Folgendes umfasst:
Neuschätzen eines Verhältnisses einer angepassten Übertragungsrate von den Daten des ersten Typs zu einer angepassten Übertragungsrate von den Daten des zweiten Typs gemäß der angepassten Spektrumsgrenze und Verwenden des Verhältnisses als ein aktualisiertes momentanes Verhältnis.

5. Verfahren nach Anspruch 1, das ferner Folgendes umfasst:
Beibehalten der Spektrumsgrenze, wenn das momentane Verhältnis nicht niedriger als das erste Zielverhältnis ist.

6. Verfahren nach Anspruch 1, wobei das Verfahren nach dem Bestimmen eines aktualisierten ersten Spektrums und eines aktualisierten zweiten Spektrums gemäß einer angepassten Spektrumsgrenze ferner Folgendes umfasst:
Bestimmen eines Spektrumsbereichs, durch den die Spektrumsgrenze hindurchgeht, während sie sich von einer ursprünglichen Spektrumsgrenze zu einer Zielspektrumsgrenze bewegt, als ein überlappendes Spektrumsintervall; und
Neuzuteilen von Bits aller Benutzer innerhalb des überlappenden Spektrumsintervalls durch Verwenden einer "On-Line"-Rekonfiguration- bzw. OLR- Technologie.

7. Spektrumaufteilungseinrichtung, **dadurch gekennzeichnet, dass** sie Folgendes umfasst:
eine Schätzungseinheit (51), die zum Schätzen eines momentanen Verhältnisses einer Übertragungsrate von Daten eines ersten Typs zu einer Übertragungsrate von Daten eines zweiten Typs gemäß einer Spektrumsgrenze konfiguriert ist, wobei die Spektrumsgrenze eine Grenze ist, die in einem Spektrum liegt und die zwischen einem ersten Spektrum und einem zweiten Spektrum liegt, wobei das erste Spektrum verwendet wird, um die Daten des ersten Typs zu übertragen und wobei das zweite Spektrum verwendet wird, um die Daten des zweiten Typs zu übertragen;
eine Regelungseinheit (52), die zum Anpassen der Grenze zwischen dem ersten Spektrum und dem zweiten Spektrum, wenn das momentane Verhältnis niedriger als ein erstes Zielverhältnis ist, so dass die Übertragungsrate von den Daten des ersten Typs erhöht wird, konfiguriert ist, wobei das erste Zielverhältnis vorbestimmt ist; und
eine Bestimmungseinheit (53), die zum Bestimmen eines aktualisierten ersten Spektrums und eines aktualisierten zweiten Spektrums gemäß einer angepassten Spektrumsgrenze konfiguriert ist.

8. Einrichtung nach Anspruch 7, wobei die Einrichtung ferner Folgendes umfasst:
eine Erhalteeinheit, die zum Erhalten eines zweiten Zielverhältnisses, einer Zielübertragungsrate von den Daten des ersten Typs zu einer Zielübertragungsrate von den Daten des zweiten Typs, von jedem Dienst konfiguriert ist; und
wobei die Bestimmungseinheit ferner zum Bestimmen eines Maximalwertes unter den zweiten Zielverhältnissen der Dienste als das erste Zielverhältnis konfiguriert ist.

9. Einrichtung nach Anspruch 8, wobei die Erhalteeinheit ferner zum Erhalten von Leitungsparameterinformationen konfiguriert ist; und wobei die Einrichtung ferner Folgendes umfasst:
eine Festlegeeinheit, die zum Festlegen von Standardwerten des ersten Spektrums und des zweiten Spektrums konfiguriert ist, wobei die Leitungsparameterinformationen und die Standardwerte verwendet werden, um das momentane Verhältnis zu schätzen.

10. Einrichtung nach Anspruch 7, wobei die Übertragungsrate von den Daten des zweiten Typs verringert wird, während die Grenze zwischen dem ersten Spektrum und dem zweiten Spektrum so angepasst wird, dass die Übertragungsrate von den Daten des ersten Typs erhöht wird; und
wobei die Schätzungseinheit ferner zum Neuschätzen eines Verhältnisses einer angepassten Übertragungsrate von den Daten des ersten Typs zu einer angepassten Übertragungsrate von den Daten des zweiten Typs gemäß der angepassten Spektrumsgrenze und zum Verwenden des Verhältnisses als ein aktualisiertes momentanes Verhältnis konfiguriert ist.

11. Einrichtung nach Anspruch 7, wobei die Einrichtung ferner Folgendes umfasst:
eine Beibehaltungseinheit, die zum Beibehalten der Spektrumsgrenze, wenn das momentane Verhältnis nicht niedriger als das erste Zielverhältnis ist, konfiguriert ist.

12. Einrichtung nach Anspruch 7, wobei die Bestimmungseinheit ferner zum Bestimmen eines Spektrumsbereichs, durch den die Spektrumsgrenze hindurchgeht, während sie sich von einer ursprünglichen Spektrumsgrenze zu einer Zielspektrumsgrenze bewegt, als ein überlappendes Spektrumsintervall konfiguriert ist; und wobei die Einrichtung ferner Folgendes umfasst:
eine Zuteilungseinheit, die zum Neuzuteilen von Bits aller Benutzer innerhalb des überlappenden Spektrumsintervalls durch Verwenden einer "On-Line"-Rekonfiguration- bzw. OLR-Technologie konfiguriert ist.

## Revendications

1. Procédé de division du spectre, **caractérisé en ce qu'**il comprend :
l'estimation d'un rapport actuel d'un débit de transmission de données d'un premier type sur un débit de transmission de données d'un second type conformément à une frontière de spectre, dans lequel la frontière de spectre est une frontière qui se trouve dans un spectre et qui est située entre un premier spectre et un second spectre, le premier spectre est utilisé pour transmettre les données du premier type, et le second spectre est utilisé pour transmettre les données du second type (étape 101) ;
l'ajustement de la frontière entre le premier spectre et le second spectre quand le rapport actuel est inférieur à un premier rapport cible, de manière à augmenter le débit de transmission des données du premier type, dans lequel le premier rapport cible est prédéterminé (étape 102) ; et
la détermination d'un premier spectre actualisé et un second spectre actualisé conformément à une frontière de spectre ajustée (étape 103).

2. Procédé selon la revendication 1, comprenant en outre avant l'ajustement de la frontière entre le premier spectre et le second spectre quand le rapport actuel est inférieur à un premier rapport cible :
l'obtention d'un second rapport cible, d'un débit de transmission cible des données du premier type sur un débit de transmission cible des données du second type, de chaque service ;
la détermination d'une valeur maximum parmi les seconds rapports cibles des services comme premier rapport cible.

3. Procédé selon la revendication 1, comprenant en outre avant l'estimation d'un rapport actuel d'un débit de transmission de données du premier type sur un débit de transmission de données du second type conformément à une frontière de spectre :
l'obtention d'informations de paramètres de ligne ; et
le réglage de valeurs par défaut du premier spectre et du second spectre, dans lequel les informations de paramètres de ligne et les valeurs par défaut sont utilisés pour estimer le rapport actuel.

4. Procédé selon la revendication 1, dans lequel pendant l'ajustement de la frontière entre le premier spectre et le second spectre, de manière à augmenter le débit de transmission des données du premier type, le débit de transmission des données du second type est diminué ; et
après l'ajustement de la frontière entre le premier spectre et le second spectre quand le rapport actuel est inférieur à un premier rapport cible, le procédé comprenant en outre
la réestimation d'un rapport d'un débit de transmission ajusté des données du premier type sur un débit de transmission ajusté des données du second type conformément à la frontière de spectre ajustée et en utilisant le rapport comme rapport actuel actualisé.

5. Procédé selon la revendication 1, comprenant en outre :
le maintien de la frontière de spectre quand le rapport actuel n'est pas inférieur au premier rapport cible.

6. Procédé selon la revendication 1, comprenant en outre après la détermination d'un premier spectre actualisé et d'un second spectre actualisé conformément à une frontière de spectre ajustée :
la détermination d'une zone spectrale, par laquelle passe la frontière de spectre lors d'un passage d'une frontière de spectre initiale à une frontière de spectre cible, comme intervalle de spectres chevauchants ; et
la réallocation de bits de tous les utilisateurs dans l'intervalle de spectres chevauchants en utilisant une technologie de reconfiguration en ligne OLR.

7. Appareil de division du spectre, **caractérisé en ce qu'**il comprend :
une unité d'estimation (51), configurée pour estimer un rapport actuel d'un débit de transmission de données d'un premier type sur un débit de transmission de données d'un second type conformément à une frontière de spectre, dans lequel la frontière de spectre est une frontière qui se trouve dans un spectre et qui est située entre un premier spectre et un second spectre, le premier spectre est utilisé pour transmettre les données du premier type, et le second spectre est utilisé pour transmettre les données du second type ;
une unité de régulation (52), configurée pour ajuster la frontière entre le premier spectre et le second spectre quand le rapport actuel est inférieur à un premier rapport cible, de manière à augmenter le débit de transmission des données du premier type, dans lequel le premier rapport cible est prédéterminé ; et
une unité de détermination (53) configurée pour déterminer un premier spectre actualisé et un second spectre actualisé conformément à une frontière de spectre ajustée.

8. Appareil selon la revendication 7, l'appareil comprenant en outre :
une unité d'obtention, configurée pour obtenir un second rapport cible, d'un débit de transmission cible des données du premier type sur un débit de transmission cible des données du second type, de chaque service ; et
l'unité de détermination est configurée en outre pour déterminer une valeur maximum parmi les seconds rapports cibles des services comme premier rapport cible.

9. Appareil selon la revendication 8, dans lequel l'unité d'obtention est configurée en outre pour obtenir des informations de paramètres de ligne ; et l'appareil comprend en outre
une unité de réglage, configurée pour régler des valeurs par défaut du premier spectre et du second spectre, dans lequel les informations de paramètres de ligne et les valeurs par défaut sont utilisés pour estimer le rapport actuel.

10. Appareil selon la revendication 7, dans lequel pendant l'ajustement de la frontière entre le premier spectre et le second spectre, de manière à augmenter le débit de transmission des données du premier type, le débit de transmission des données du second type est diminué ; et
l'unité d'estimation est configurée en outre pour réestimer un rapport d'un débit de transmission ajusté des données du premier type sur un débit de transmission ajusté des données du second type conformément à la frontière de spectre ajustée et en utilisant le rapport comme rapport actuel actualisé.

11. Appareil selon la revendication 7, l'appareil comprenant en outre :
une unité de maintien, configurée pour maintenir la frontière de spectre quand le rapport actuel n'est pas inférieur au premier rapport cible.

12. Appareil selon la revendication 7, dans lequel l'unité de détermination est configurée en outre pour déterminer une zone spectrale, par laquelle passe la frontière de spectre lors d'un passage d'une frontière de spectre initiale à une frontière de spectre cible, comme intervalle de spectres chevauchants ; et l'appareil comprenant en outre une unité d'allocation, configurée pour réallouer des bits de tous les utilisateurs dans l'intervalle de spectres chevauchants en utilisant une technologie de reconfiguration en ligne OLR.
